# EUROPÄISCHE PATENTSCHRIFT

(11) **EP 3 098 884 B1**
(45) Veröffentlichungstag und Bekanntmachung des Hinweises auf die Patenterteilung: **14.02.2018**
(21) Anmeldenummer: 16001176.3
(22) Anmeldetag: 24.05.2016
(51) Int. Cl.: H01M 6/08

(54) **BEARBEITUNGSVORRICHTUNG UND -VERFAHREN FÜR DIE VERWERTUNG ELEKTROCHEMISCHER ENERGIESPEICHER**
PROCESSING DEVICE AND METHOD FOR THE RECLAMATION OF ELECTROCHEMICAL ENERGY STORAGE DEVICES
DISPOSITIF ET PROCÉDÉ DE TRAITEMENT POUR LA RÉCUPÉRATION D'ACCUMULATEURS D'ÉNERGIE ÉLECTROCHIMIQUES

(30) Priorität: 27.05.2015 DE 102015006530
(43) Veröffentlichungstag der Anmeldung: 30.11.2016
(73) Patentinhaber: Jeschke, Bert, 63322 Rödermark (DE)
(72) Erfinder: Jeschke, Bert, 63322 Rödermark (DE)

(56) Entgegenhaltungen:
- EP-A1- 0 452 564
- CN-A- 104 868 138
- CN-Y- 2 925 654

## Beschreibung

Die Erfindung betrifft eine Bearbeitungsvorrichtung und ein demgemäßes Bearbeitungserfahren für die Verwertung aufgebrauchter beziehungsweise verbrauchter elektrochemischer Energiespeicher, insbesondere von handelsüblichen Alkali-Mangan Rundzellen des Typs AA oder AAA, wobei eine Vielzahl von Energiespeichern gleichzeitig mechanisch bearbeitet, in ihre wesentlichen Komponenten zerlegt und für das weitere Recycling beziehungsweise die weitere Verwertung vorbereitet und bereitgestellt werden.

Elektrochemische Energiespeicher insbesondere in Form von Rundzellen, beispielsweise als Alkali-Mangan Rundzellen des Typs C, D, AA oder AAA finden sich heute in vielen Bereichen des täglichen Lebens und Bedarfs, insbesondere zum Betrieb einer Vielzahl elektrischer Kleingeräte, wie beispielsweise Radios, Fernbedienungen, Fotoapparate, Klingeln, CD-Spieler und dergleichen.
Demgemäß fallen diese nach Gebrauch in großer Stückzahl an, wobei allein in Deutschland jährlich ca. 1,5 Milliarden Energiespeicher in Form von Batterien und Akkumulatoren verkauft und umgesetzt werden. Diese sind auch nach Gebrauch zum Einen wichtiger Rohstoffträger und zum Anderen gefährliches Gut welches bei unsachgemäßer Lagerung die Umwelt nachhaltig verunreinigen und schädigen könnte.
Besondere Bedeutung kommt demnach der fach- und sachgerechten Verwertung derartiger Energiespeicher und der Rückführung zumindest eines Teils ihrer Komponenten in die Wertstoffkette zu.

Derartige Rundzellen verfügen dabei in aller Regel über ein Gehäuse mit metallischer Hülle, in welchem ein die Kathode bildender Außenmantel vorgesehen ist.
Dieser Außenmantel umhüllt dabei einen die Anode bildenden Kern, wobei zwischen Kern und Außenmantel eine ionendurchlässige Membran vorgesehen ist, welche beispielsweise aus Zellstoff gebildet ist.
Weiterhin sind der Außenmantel; welcher im Wesentlichen durch das Kathodenmaterial gebildet ist, und der Kern, welcher im Wesentlichen durch das Anodenmaterial gebildet ist, mit jeweils zugehörigen nach außen sichtbaren elektrischen Kontakten elektrisch leitend verbunden.

Bei einer beispielhaften handelsüblichen Alkali-Mangan Rundzelle weist der Kern eine aus einer Paste aus Zink und Kaliumhydroxid gebildete Anode auf, welche in ionendurchlässiges Faserpapier eingewickelt und auf diese Weise physisch von der aus gepresstem Braunstein (Manganoxid) gebildeten Kathode getrennt ist, derart, dass ein direkter oder unmittelbarer Kontakt zwischen Anode und Kathode vermieden ist. Weiterhin ist ein dorn- oder stiftartiges Metallelement, welches beispielsweise aus Messing gebildet ist, vorgesehen, welches mit einer kreisförmigen, metallischen Bodenplatte elektrisch leitend verbunden ist und in die Anode einragt. Diese Bodenplatte bildet dabei den Minuspol der Rundzelle. Die Kathode ist umfänglich von und elektrisch leitend mit einer becherartigen Metallkapsel umgeben, deren Kapselboden, welcher der Bodenplatte gegenüberliegend angeordnet ist, eine zylindrische, nach außen gerichtete Ausformung aufweist, welche den Pluspol bildet.

Bei der Verwertung aufgebrauchter beziehungsweise verbrauchter elektrochemischer Energiespeicher, insbesondere einer der vorgenannten Rundzellenarten, werden diese zunächst gesammelt und dann derart aufbereitet, dass wiedergewinnbare Komponenten möglichst einfach und mit vergleichsweise geringem Aufwand voneinander separierbar sind.
Diesbezüglich bekannte Verfahren sind dabei beispielsweise das Hochofenverfahren bei welchem Alkali-Mangan- Batterien in einem Hochofen eingeschmolzen und maßgeblich Roheisen, Zinkkonzentrat und Schlacke erzeugt werden, wobei es sich bei dem Hochofenverfahren um ein sehr komplexes Verfahren handelt welches einen vergleichsweise hohen technischen und energetischen Aufwand erfordert. Darüber hinaus sind auch kombinierte Verfahren aus vorbereitenden mechanischen Bearbeitungs- und nachgeordneten chemischen Trenn- und/oder Aufschlussverfahren bekannt. Ein derartiges Verwertungsverfahren ist dabei beispielsweise der EP 2 182 569 B1 entnehmbar, wobei bei jedem einzelnen Energiespeicher jeweils in mehreren Arbeitsschritten die metallische Hülle sowie die Isolierschicht vom Kern, Außenmantel und den Elektroden entfernt wird. Nachteilig muss dabei jeder einzelne Energiespeicher für sich nacheinander mehreren mechanischen Bearbeitungsschritten unterzogen werden, bevor die wieder verwertbaren Komponenten und insbesondere Kern und Außenmantel einzeln vorliegen. Aufgrund des vergleichsweise hohen mechanischen Bearbeitungsaufwandes ist der erreichbare Durchsatz an bearbeitbaren Energiespeichern dabei stark eingeschränkt und die Bearbeitungseinrichtung aufgrund der Vielzahl unterschiedlicher mechanischer Bearbeitungswerkzeuge vergleichsweise komplex, wartungsintensiv und störanfällig.

Eine effiziente und umweltschonende Verwertung und Bearbeitung größerer Mengen oder Stückzahlen an verbrauchten Energiespeichern ist damit jedoch nur eingeschränkt und damit nicht zufriedenstellend möglich.

Der Erfindung liegt damit die Aufgabe zu Grunde eine effiziente und umweltschonende Möglichkeit zur vorbereitenden mechanischen Bearbeitung verbrauchter elektrochemischer Energiespeicher für deren Wiederverwertung anzugeben, mit welchem in nur wenigen Bearbeitungsschritten eine mechanische Bearbeitung auch einer größeren Stückzahl von Energiespeichern bewirkbar und die Energiespeicher in ihre wesentlichen Komponenten, insbesondere in Anodenmaterial und Kathodenmaterial sowie Hülle, zerlegbar und auftrennbar sind.

Diese Aufgabe wird durch ein Bearbeitungsverfahren mit den Merkmalen des Anspruchs 1 gelöst. Vorteilhafte Ausgestaltungen und Weiterbildungen des erfindungsgemäßen Verfahrens sowie einer demgemäßen Bearbeitungsvorrichtung sind in weiteren Ansprüchen und der nachfolgenden Beschreibung angegeben.

Demnach werden beim erfindungsgemäßen Bearbeitungsverfahren für aufgebrauchte elektrochemische Energiespeicher, und insbesondere für Alkali-Mangan-Rundzellen, vorsortierte Energiespeicher eines Typs selektiert und gerichtet und zumindest einer magazinartigen Halteeinrichtung zugeführt, wobei in der jeweiligen Halteeinrichtung mehrere Energiespeicher in einem Raster nebeneinander ausgerichtet und angeordnet werden und mittels wenigstens einer Ausstoßeinrichtung schrittweise zunächst der Kern und das Anodenmaterial der rasterartig angeordneten Energiespeicher aus den Energiespeichern und anschließend der Außenmantel und das Kathodenmaterial sowie die Energiespeicherhülle aus der Halteeinrichtung ausgestoßen beziehungsweise ausgedrückt und getrennt voneinander gesammelt und einer weiteren Verarbeitung bereitgestellt werden.

Vorteilhaft ist in einer bevorzugten Ausführungsform dabei vorsehbar, dass alle Energiespeicher in einer Halteeinrichtung system- und/oder verfahrensgemäß gleichzeitig ver- beziehungsweise bearbeitet werden.

In einer vorteilhaften Ausgestaltung sind mehrere Energiespeicher, insbesondere 48 Energiespeicher, in die Halteeinrichtung einsetzbar und gleichzeitig bearbeitbar, so dass in lediglich einem einzigen Bearbeitungsschritt jeweils gleichzeitig alle Energiespeicherkerne, insbesondere 48 Energiespeicherkerne, und in lediglich einem weiteren Bearbeitungsschritt alle Außenmäntel, insbesondere 48 Außenmäntel und Hüllen, der zu bearbeitenden Energiespeicher in der jeweiligen Halteeinrichtung ausgedrückt und/oder ausgestoßen und gesammelt werden.

Grundsätzlich kann durch entsprechende Abstimmung und Anpassung der jeweilig eingesetzten magazinartigen Halteeinrichtung und Ausstoßeinrichtung auch eine andere, nahezu beliebige Anzahl an Energiespeichern gleichzeitig bearbeitet werden. Entsprechendes gilt dabei auch für andere Energiespeichergrößen und Typen auch diesbezüglich sind Verfahren und Vorrichtung flexibel anpassbar.

Vorteilhaft sind zur Gewährleistung eines reibungslosen und möglichst unterbrechungsfreien Prozessablaufs sowie zur weiteren Erhöhung der Durchsatzmenge dabei mehrere magazinartige Halteeinrichtungen vorsehbar, welche jeweils nacheinander mit verbrauchten Energiespeichern gefüllt und schrittweise zunächst die Energiespeicherkerne in der jeweiligen Halteeinrichtung gleichzeitig ausgestoßen beziehungsweise ausgedrückt und gesammelt, und dann die in der jeweiligen Halteeinrichtung verbliebenen Außenmäntel und Hüllen gleichzeitig aus der Halteeinrichtung ausgestoßen und getrennt von den Kernen gesammelt werden, so dass die derart mechanisch getrennten und separiert gesammelten Komponenten eines jeden Energiespeichers für die weitere Verarbeitung bereitstellbar sind beziehungsweise bereitgestellt werden.

Weiterbildend ist vorsehbar, dass dabei mehrere Halteeinrichtungen auf einer Kreisbahn umlaufend nacheinander bestückt beziehungsweise mit Energiespeichern befüllt und anschließend Halteeinrichtung für Halteeinrichtung die bestückten beziehungsweise befüllten Energiespeicher je Halteeinrichtung gleichzeitig mechanisch bearbeitet werden.

In einer weiteren Ausführung erfolgt der Umlauf getaktet oder schrittweise in 15° Schritten, wobei dann 24 Halteeinrichtungen auf einer Kreisbahn umlaufen.

In einer weiteren Ausführung geschieht die Befüllung einer Halteeinrichtung in zwei Schritten, wobei eine 48 Energiespeicher aufnehmende Halteeinrichtung in zwei Chargen oder Durchgängen mit jeweils gleichzeitig 24 Energiespeichen in versetzter Anordnung befüllt oder bestückt wird.

Des Weiteren wird die gestellte Aufgabe durch eine erfindungsgemäße Bearbeitungsvorrichtung für die Verwertung elektrochemischer Energiespeicher und insbesondere für Alkali-Mangan-Rundzellen gelöst, welche insbesondere zur Ausführung des vorgestellten Verfahrens geeignet ist, und welche wenigstens eine magazinartige Halteeinrichtung sowie wenigstens eine dazu komplementär ausgebildete Ausstoßeinrichtung umfasst, wobei die Halteeinrichtung mehrere in einem Raster angeordnete Energiespeicheraufnahmen aufweist und jede dieser Aufnahmen als zylinderartige Ausnehmung und/oder hohlzylinderartig ausgebildet ist und in Querschnitt und/oder lichte Weite und/oder Abmessung auf die Abmessungen der jeweilig zu bearbeitenden Energiespeicherart angepasst sind, und die Ausstoßeinrichtung mehrere im Raster der Halteeinrichtung angeordnete Ausstoßer aufweist und jeder Ausstoßer als zylinderartiger Stift oder Zapfen ausgebildet ist, der in Querschnitt und/oder Abmessung auf die Abmessungen des jeweiligen Energiespeicherkerns oder des jeweilig zu bearbeitenden Energiespeichers selbst angepasst ist.

In vorteilhafter Ausgestaltung ist eine zweite Ausstoßeinrichtung vorgesehen, welche mehrere im Raster der Halteeinrichtung angeordnete zweite Ausstoßer aufweist und jeder zweite Ausstoßer als zylinderartiger Stift oder Zapfen ausgebildet ist, der in Querschnitt und/oder Abmessung, insbesondere Außendurchmesser und Länge, auf die Abmessungen der jeweilig zu bearbeitenden Energiespeicherart angepasst ist.

Weiterbildend ist eine Lagerplatte mit, der jeweiligen Ausstoßeinrichtung gegenüberliegend angeordneten Durchgangsöffnungen vorgesehen, gegen welche sich im Bereich der Halteeinrichtung die jeweilig zu bearbeitenden Energiespeicher abstützen, und welche Durchgangsöffnungen in Durchmesser (lichte Weite) und/oder Querschnitt auf den während des Ausstoßens jeweilig in sie eingreifenden oder durchgreifenden Ausstoßer angepasst sind.

Vorteilhaft ist die Lagerplatte dabei unterhalb der jeweiligen Halteeinrichtungen angeordnet, so dass die Halteeinrichtungen zwischen Lagerplatte und Ausstoßeinrichtung positionierbar und/oder anordenbar sind.

In einer weiteren Ausgestaltung weist die jeweilige Energiespeicheraufnahme der Halteeinrichtung an ihrem der Ausstoßeinrichtung abgewandtem Ende eine Querschnittsverengung, insbesondere in Form von drei nach innen gerichteten Anformungen auf, auf welchen sich die Energiespeicher nach Einfüllen beziehungsweise Einsetzen in die Halteeinrichtung abstützen und/oder aufliegen oder kraftschlüssig gehalten sind.

Dabei ist vorsehbar, dass die drei Anformungen gleichverteilt über den Innenumfang der Aufnahme angeordnet sind.

Um eine Beschädigung des jeweiligen Ausstoßers zu vermeiden ist dieser vorteilhaft an die Geometrie und Abmessung, insbesondere betreffend Länge, Höhe Breite, der Querschnittsverengung und insbesondere der drei Anformungen angepasst.

In vorteilhafter Weiterbildung sind die Energiespeicher in Längsrichtung vertikal in den Aufnahmen der magazinartigen Halteeinrichtung formschlüssig und/oder lateral verrückungsfest und/oder verkippungssicher anordenbar.

In einer weiteren Ausgestaltung ist die wenigstens eine magazinartige Halteeinrichtung an einem Rundtakttisch, insbesondere kraftschlüssig, beispielsweise mittels Verschraubung oder Klemmung, angeordnet.

Vorteilhaft ist dabei vorsehbar, dass die wenigstens eine Halteeinrichtung in den Rundtakttisch eingelassen ist, wobei der Rundtakttisch eine Montageplatte mit wenigstens einer Ausnehmung aufweist in welche die jeweilige Halteeinrichtung eingesetzt ist. Die jeweilige Halteeinrichtung weist dabei vorzugsweise eine umlaufende Kante auf, mit welcher sie sich an der Montageplatte abstützt und auf dieser Montageplatte aufliegt.

In einer weiteren Ausgestaltung weist der Rundtakttisch neben der Montageplatte eine unterhalb der Montageplatte angeordnete Lagerplatte auf, gegen welche sich die eingesetzten Energiespeicher abstützten und welche im Bereich der jeweiligen Ausstoßeinrichtung, deren Ausstoßern gegenüberliegend angeordnete Durchgangsöffnungen für den Durchgang oder Durchtritt der Energiespeicherkerne oder Energiespeicher beim Ausstoßen derselben aufweist.

Vorteilhaft ist dabei vorsehbar, dass Montageplatte und Lagerplatte des Rundtakttisches relativ zueinander bewegbar, insbesondere drehbewegbar, angeordnet sind.

Vorzugsweise erfolgt die Drehbewegung dabei in Schritten und/oder getaktet, wobei die Schrittweite von der Anzahl der auf einer Kreisbahn beziehungsweise einem Kreisumfang angeordneten Halteeinrichtungen abhängt.

Die jeweilige Drehbewegung kann dabei mittels wenigstens einer elektromagnetischen oder pneumatischen oder hydraulischen Antriebseinrichtung motorisch bewirkt sein.

Vorteilhaft ist dabei vorsehbar, daß die Lagerplatte starr und die Montageplatte drehbewegbar angeordnet sind.

In einer alternativen Ausgestaltung ist statt eines Rundtakttisches auch eine Anordnung mit Linearführung vorstellbar, wie beispielsweise eine bandartige oder kettenartige Anordnung mit wenigstens einer Aufnahme zur zumindest temporären Aufnahme einer oder mehrerer Halteeinrichtungen, wobei durch die Linearführung und wenigstens eine Aufnahme ebenfalls eine Art Montageplatte gebildet ist, und wobei weiterhin vorsehbar ist, dass die jeweilige Halteeinrichtung über eine entsprechende Lagerplatte hinwegbewegbar ist.

Weiterhin ist vorsehbar, dass im Bereich der zweiten Ausstoßeinrichtung für den jeweiligen Außenmantel in der Lagerplatte wenigstens eine Ausnehmung vorgesehen ist, derart, daß die in der Halteeinrichtung angeordneten kernlosen Energiespeicher durch die Montageplatte und Lagerplatte und damit den Rundtakttisch hindurch ausstoßbar beziehungsweise hindurchbewegbar sind und/oder unterhalb der Lagerplatte, insbesondere mittels einer Fördereinrichtung, auffangbar und sammelbar sind.

In einer weiteren Ausgestaltung sind auf dem Rundtakttisch und insbesondere der Montageplatte mehrere, vorzugsweise 24 magazinartige Halteeinrichtungen vorgesehen, welche nahezu radial umlaufend, insbesondere mit einem Winkelabstand α von 15°, angeordnet sind.

In einer weiteren Ausgestaltung sind in der Lagerplatte wenigstens zwei Bereiche mit Ausnehmungen vorgesehen, wobei in wenigstens einem ersten Bereich eine erste Ausnehmung vorgesehen ist, in welche eine Matritze einsetzbar ist, welche Durchgangsöffnungen aufweist, die in Anzahl und Anordnung den Aufnahmen der wenigstens einen Halteeinrichtung entsprechen und einen Querschnitt und/oder lichte Weite aufweisen, welche auf die Abmessungen des Kerns der jeweilig zu bearbeitenden Energiespeicherart und/oder die Ausstoßer der jeweiligen Ausstoßeinrichtung angepasst ist.

Weiterhin ist vorsehbar, dass Montageplatte und Lagerplatte derart zueinander ausrichtbar und/oder rotatorisch bewegbar sind beziehungsweise eine relative Ausrichtung von Montageplatte und Lagerplatte bewirkbar ist, dass die Energiespeicherkerne der jeweiligen Halteeinrichtung nach unten durch den Rundtakttisch und insbesondere die Montageplatte und die Lagerplatte hindurch in eine Förder- und/oder Sammeleinrichtung ausdrückbar und/oder ausstoßbar sind, wobei sich die zu bearbeitenden Energiespeicher, und insbesondere ihre Außenmäntel, während des Ausdrückens oder Ausstoßens gegen die Lagerplatte und/oder die eingesetzte Matritze abstützen, und das ausgedrückte Energiespeichermaterial unterhalb des Tisches aufgefangen und mittels entsprechender Förder- und/oder Sammeleinrichtungen aufgefangen und gesammelt wird.

Weiterbildend ist vorsehbar, dass die Lagerplatte als Gegenlager für die in der Halteeinrichtung angeordneten Energiespeicher dient und ein ungewolltes Durchfallen der Energiespeicher verhindert.

In der Lagerplatte ist vorteilhaft in einem zweiten Bereich wenigstens eine zweite Ausnehmung vorgesehen, wobei Montageplatte und Lagerplatte jeweils derart zueinander ausrichtbar und/oder bewegbar sind beziehungsweise eine relative Ausrichtung von Montageplatte und Lagerplatte bewirkbar ist, dass die in der jeweiligen Halteeinrichtung verbliebenen Energiespeicherreste, insbesondere Außenmäntel und Hülle, nach unten durch den Rundtakttisch und insbesondere die Montageplatte und die Lagerplatte hindurch in eine Sammel- und/oder Fördereinrichtung ausdrückbar und/oder ausstoßbar und/oder auswerfbar sind, und das jeweilige Energiespeicherrestmaterial unterhalb des Tisches aufgefangen und mittels wenigstens einer entsprechenden Förder- und/oder Sammeleinrichtungen gesammelt werden kann.

Dabei kann weiterhin vorgesehen sein, dass die Montageplatte und die Lagerplatte relativ zueinander bewegbar und die Montageplatte relativ zur Ausstoßeinrichtung bewegbar ausgebildet sind. Die jeweilige Bewegung kann dabei vorteilhaft schrittweise oder getaktet mittels beispielsweise wenigstens eines elektrischen Antriebs bewirkt sein. Die Taktung beträgt bei einem Rundtakttisch dabei vorzugsweise jeweils ein Winkelmaß von 15°.

In einer vorteilhaften Ausgestaltung ist die Lagerplatte starr und die Montageplatte bewegbar, insbesondere drehbewegbar ausgebildet, derart dass die wenigstens eine Halteeinrichtung, insbesondere in einer Drehbewegung, über die Lagerplatte hinwegbewegbar ist.

Vorteilhaft sind Lagerplatte und Montageplatte horizontal fluchtend angeordnet und in ihren Abmessungen aufeinander angepasst.

Weiterhin ist vorsehbar, dass die Lagerplatte derart ausgebildet und angeordnet oder anordenbar ist, dass der erste Bereich mit wenigstens einer ersten Ausnehmungen der Ausstoßeinrichtung für den Energiespeicherkerns gegenüberliegend angeordnet ist, so dass jedem Kern-Ausstoßer eine Lagerplattenausnehmung oder eine Ausnehmung der in die Lagerplatte eingesetzten Matritze zugeordnet und gegenüberliegend angeordnet ist, so dass die Energiespeicherkerne der in der jeweiligen Halteeinrichtung eingesetzten Energiespeicher mittels jeweiligem kraftbeaufschlagten Ausstoßer aus dem Energiespeicher durch den Rundtakttisch, insbesondere durch die Montageplatte und die Lagerplatte, nach unten ausdrückbar und unterhalb der Lagerplatte und des Rundtakttisches auffangbar ist.

Weiterhin ist vorsehbar, dass das der Ausstoßeinrichtung zugewandte offene Ende der jeweiligen Energiespeicheraufnahme endseitig einen Innenkonus aufweist um das Einführen beziehungsweise Einfüllen der verbrauchten Energiespeicher in die Halteeinrichtung und ihre Aufnahme zu erleichtern.

Die Ausstoßeinrichtung umfasst dabei mehrere in Anzahl und Anordnung auf die Halteeinrichtung angepasste stempelartige Ausstoßer, deren Querschnitt auf den Kernquerschnitt des jeweils zu bearbeitenden Energiespeichers sowie die lichte Weite der ersten Ausnehmung der Lagerplatte oder der Matritze angepasst und mit einer Kraft beaufschlagbar sind, wobei sich die Ausstoßer bei Beaufschlagung mit einer Kraft auf die Halteeinrichtung zubewegen, derart dass die stempelartigen Ausstoßer in einer Endlage in die jeweilig dazu komplementären Energiespeicheraufnahmen eingreifen und/oder diese über ihre gesamte Länge durchgreifen. Beispielhaft kann die nötige Presskraft dabei mittels einer 50 Tonnen Exzenterpresse mit Gasdruckzylindern oder -kolben beaufschlagt werden.

Aufgrund der geringeren lichten Weite der Ausnehmungen des ersten Bereichs und insbesondere der Matritze gegenüber dem Energiespeicheraussendurchmesser und der lichten Weite der Energiespeicheraufnahmen der Halteeinrichtung wird der verbliebene Energiespeicherrest, insbesondere der Außenmantel, im Wesentlichen die Kathode und die Hülle, sicher in der Halteeinrichtung gehalten und geführt.

In einer weiteren vorteilhaften Ausgestaltung weist die Ausstoßeinrichtung einen Niederhalter mit Durchgangsöffnungen für den Durchgriff der einzelnen Ausstoßer auf, in welchen die einzelnen Ausstoßer entlang ihrer Bewegungsbahn derart geführt werden, so dass eine Verbiegung oder Verformung der einzelnen Ausstoßer bei Auftreffen auf den jeweiligen Energiespeicher vermieden und gehindert ist.

Verfahrensgemäß senkt sich in einem ersten Schritt der Niederhalter beim Ausstoßvorgang des Energiespeicherkerns zunächst bis auf die Halteeinrichtung ab und drückt dabei nach dem Einsetzen noch überstehende Energiespeicher in die Aufnahmen der jeweiligen Halteeinrichtung bis die Energiespeicher mit deren Oberkante bündig abschließen.

In einem optionalen Zwischenschritt ist zur Erleichterung beziehungsweise Vereinfachung des Ausstoßvorgangs der Energiespeicherkerne eine Schwächung, insbesondere Materialschwächung, der nach unten gerichteten Stirnfläche, das heißt der dem Niederhalter abgewandten Fläche der in der Halteeinrichtung eingesetzten Energiespeicher, insbesondere Rundzellen, vorsehbar oder bewirkbar, wobei beispielhaft von unten eine Ausnehmung in die Stirn- oder Kontaktfläche eingeformt oder eingestanzt wird.

Für diese Bearbeitung wird dabei beispielhaft eine Schwächungseinrichtung mit einer Press- oder Stanzeinrichtung mit einer der Anzahl der in der Halteeinrichtung vorgesehenen Energiespeicher-Aufnahmen entsprechenden Anzahl an Schwächungsstempeln, insbesondere mit radial umlaufender und/oder stern- oder strahlenförmiger Schneidkante und/oder konisch zulaufendem Dorn, eingesetzt beziehungsweise verwendet, wobei die Stempel mit einer voreinstellbaren Kraft beaufschlagt werden beziehungsweise beaufschlagbar sind und beim Schwächungsvorgang von unten in die Aufnahmen der jeweiligen Halteeinrichtung einfahren und eingreifen, so dass in die dem Niederhalter, der als Gegenlager dient, abgewandte und/oder unten liegende Stirnfläche oder Kontaktfläche der jeweiligen Energiespeichers und insbesondere der jeweiligen Rundzellen eine Schwächungsöffnung oder eine oder mehrere Schwächungslinien beziehungsweise Sollbruchlinien eingebracht und/oder eingestanzt werden beziehungsweise abschließend eingebracht und/oder eingestanzt sind.

In einem zweiten Schritt werden dann die Ausstoßer durch die Durchgangsöffnungen des Niederhalters in die Energiespeicher und die Aufnahmen der jeweiligen Halteeinrichtung abgesenkt und drücken somit die Energiespeicherkerne aus den Energiespeichern nach unten aus.

Danach werden die Ausstoßer wieder aus den Energiespeichern zurückgezogen, wobei der Niederhalter während des Zurückziehens zunächst auf der jeweiligen Halteeinrichtung verbleibt, bis sich die Ausstoßer wieder außerhalb der Energiespeicher befinden. Dann wird auch der Niederhalter wieder angehoben beziehungsweise zurückgezogen.

Mittels des Niederhalters wird vermieden, dass die Energiespeicherreste an den Ausstoßern hängen oder haften bleiben und mit diesen aus der Halteeinrichtung entfernt werden. Demnach hält der Niederhalter die Energiespeicher während des gesamten Ausstoßvorgangs der Kerne in Position und fixiert diese in der Halteeinrichtung.

Weiterbildend ist vorsehbar, dass der Niederhalter als Platte mit rasterartig angeordeten Ausnehmungen oder Durchgängen, insbesondere in der Art von Durchgangsbohrungen, ausgebildet ist, wobei das Raster dem Raster der Ausstoßeinrichtung sowie der Halteeinrichtung entspricht und der Querschnitt der Ausnehmungen auf den Querschnitt der einzelnen Ausstoßer angepasst ist.

In einer weiteren Ausgestaltung ist vorgesehen, dass die Kontaktfläche des jeweiligen Ausstoßers zur Erleichterung des Ausstoß- beziehungsweise Auspressvorgangs eine radial umlaufende Schneidkante aufweist.

In einer weiteren Ausgestaltung ist vorgesehen, dass bei Bewegung des Rundtakttisches und insbesondere der jeweiligen Halteeinrichtung relativ zur Lagerplatte, dann wenn sich die Halteeinrichtung über dem zweiten Bereich der Lagerplatte befindet, die in der Halteeinrichtung verbliebenen Energiespeicherreste durch die wenigstens eine Ausnehmung des zweiten Bereichs der Lagerplatte hindurchfallen oder mittels einer zweiten Ausstoßeinrichtung durch die wenigstens eine Ausnehmung in der Lagerplatte hindurchgedrückt und unterhalb der Lagerplatte aufgefangen und gesammelt werden. Vorteilhaft ist hierzu nur ein vergleichsweise geringer Kraftaufwand erforderlich.

In einer weiteren Ausgestaltung ist wenigstens eine Steuereinrichtung mit wenigstens einer Datenverarbeitungseinheit, insbesondere einem Mikroprozessor oder einer Mikroprozessoreinheit oder einem ASIC oder einer SPS (Speicherprogrammierbaren Steuerung), zur Steuerung des mechanischen Bearbeitungsprozesses und der diesbezüglichen Vorrichtung vorgesehen.

In einer vorteilhaften Ausgestaltung umfasst die Bearbeitungsvorrichtung wenigstens einen Vorratsbunker in welchem die vorselektierten sortenreinen Energiespeicher zur mechanischen Bearbeitung vorgehalten und gelagert sind.

Weiterbildend ist zumindest eine Vibra Abzugsrinne vorsehbar über welche die Energiespeicher aus dem Vorratsbunker batch- beziehungsweise stapelweise an eine Vereinzelungsanlage übergebbar sind beziehungsweise übergeben werden.

Vorteilhaft sind mehrere Rundbürsten vorsehbar mittels derer die linear durch Vibration angetriebenen Energiespeicher, insbesondere Rundzellen, einer oder mehreren Schlauchleitungen zugeführt werden.

Weiterbildend sind am Ende der jeweiligen Schlauchleitung, die gleichzeitig auch als Vorratsbehälter dient, wenigstens ein Sensor und/oder wenigstens eine SPS gesteuerte Absperrung angeordnet, die der jeweiligen Steuerungseinrichtung Ladebereitschaft meldet.

Vorteilhaft ist vorsehbar, dass die aufgebrauchten beziehungsweise verbrauchten Energiespeicher, insbesondere die Rundzellen, in die magazinartige Halteeinrichtung des Rundtakttisches eingefüllt werden, wobei jede Halteeinrichtung beispielhaft jeweils 48 Energiespeicher, insbesondere Rundzellen des Typs AA oder AAA, aufnehmen kann.

An dieser Stelle sei angemerkt, dass selbstverständlich auch Halteeinrichtungen mit einer anderen Anzahl an Energiespeicheraufnahmen vorgesehen werden können, wobei Halteeinrichtung, Ausstoßeinrichtung, Lagerplatte und Matritze stets aufeinander anzupassen und abzustimmen sind.

In einer weiteren Ausgestaltung ist vorgesehen, dass immer taktweise parallel an zwei versetzten Stellen mittels zweier Zuführstränge mit jeweils mehreren Schlauchleitungen, insbesondere 24 Schlauchleitungen, jeweils eine der Anzahl an Schlauchleitungen entsprechende Anzahl an Rundzellen, insbesondere 24 Rundzellen, befüllt werden.

Sollte es in einem Zuführstrang zu Zuführproblemen wegen beispielsweise einer deformierten oder durch Rost oder Korrosion zerfressenen Rundzelle kommen, wird die jeweilige Schlauchleitung oder Zuführung verriegelt beziehungsweise gesperrt und es wird ohne Unterbrechung weitergetaktet. Bei Ausfall oder Störung einer Schlauchleitung oder Zuführung eines Zuführstranges erfolgt demnach bei beispielsweise regulär 48 Zuführungen und korrespondierenden Energiespeicheraufnahmen der Halteeinrichtung eine Befüllung mit lediglich 47 Energiespeichern. Die der jeweils gestörten Schlauchleitung beziehungsweise Zuführung entsprechende Aufnahme bleibt leer beziehungsweise unbesetzt. Der eigentliche Befüllungs- beziehungsweise Bestückungsprozess der übrigen Aufnahmen bleibt davon unbeeinträchtigt.

Die Störung kann dann einfach bei nächster Gelegenheit behoben werden, ohne dass der Bearbeitungsprozess nachhaltig beeinträchtigt oder gestört wird.

Weiterhin ist vorsehbar, dass die mit Energiespeichern gefüllten Halteeinrichtungen nach dem Befüllen weitergetaktet, insbesondere weiterbewegt, und die eingefüllten Energiespeicher bei dem Auspressvorgang vom Energiespeicherkern, das heißt vom Zinkoxid, Papier, Messingstift getrennt werden, wobei die Kerne nach dem Ausstoßen auf eine Fördereinrichtung, insbesondere ein Abförderband fallen.

Nach der mechanischen Separation kann der ausgepresste jeweilige Materialmix in eine Aufbereitungsanlage überführt werden in welcher beispielsweise bei einer Alkali-Mangan Rundzelle das im ausgepressten Kern enthaltene Zinkoxid der Anode von Fremdkörpern getrennt werden kann.

Weiterhin ist vorsehbar, dass die ausgepressten entkernten Energiespeicher, insbesondere Rundzellen, in einem nächsten Schritt aus der jeweiligen Halteeinrichtung auf einen Sprengkegel, insbesondere einen Stahlkegel gedrückt und aufgeweitet werden. Beim Aufweiten wird die Blechhülle vom Manganoxid getrennt und beide fallen dann als Materialmix auf eine Fördereinrichtung, insbesondere ein Abfuhrförderband.

In einer weiteren Ausgestaltung ist ein Magnetband und/oder ein Kopfmagnet vorgesehen, welcher die Metallteile aus dem Materialmix herausfiltert und/oder aussortiert, wobei das verbleibende Manganoxid beispielsweise einer vorteilhaft vorsehbaren Mühle mit einstellbarer Korngröße und Wechsel Big Bag Abfüllung zuführbar ist.

Die weitere Darlegung der Erfindung sowie vorteilhafter Ausgestaltungen und Weiterbildungen erfolgt anhand einiger Figuren und diesbezüglicher Ausführungsbeispiele.

Es zeigen:
Fig. 1 Beispielhaft ausgebildete stilisierte Bearbeitungseinrichtung in 3Dim-Darstellung,
Fig. 2 beispielhaft ausgebildete Bearbeitungseinrichtung mit Fördereinrichtungen in 3Dim-Darstellung und Draufsicht von oben,
Fig. 3 beispielhaft ausgebildete Bearbeitungseinrichtung mit Fördereinrichtungen in 3Dim-Darstellung in Schrägansicht,
Fig. 4 beispielhaft ausgebildete Bearbeitungseinrichtung in 3Dim-Schnittdarstellung durch Rundtakttisch und Halteeinrichtung in Schrägansicht,
Fig. 5 beispielhaft ausgebildete Bearbeitungseinrichtung in 3Dim- Schnittdarstellung durch Rundtakttisch und Halteeinrichtung in Schrägansicht mit gegenüber Fig. 4 differierendem Blickwinkel,
Fig. 6 beispielhaft ausgebildete Bearbeitungseinrichtung in 3Dim-Darstellung in Schrägansicht und Angabe der jeweils zur Bestückung vorgesehenen Energiespeicherpakete,
Fig. 7 beispielhaft ausgebildeter Rundtakttisch mit Halteeinrichtungen und zur Bestückung vorgesehenen Energiespeicherpaketen und Taktwinkel α in 3Dim-Darstellung in Schrägansicht,
Fig. 8 beispielhaft ausgebildete teilweise bestückte Halteeinrichtung mit Querschnittsverengung in 3Dim-Schnittdarstellung in Schrägansicht.

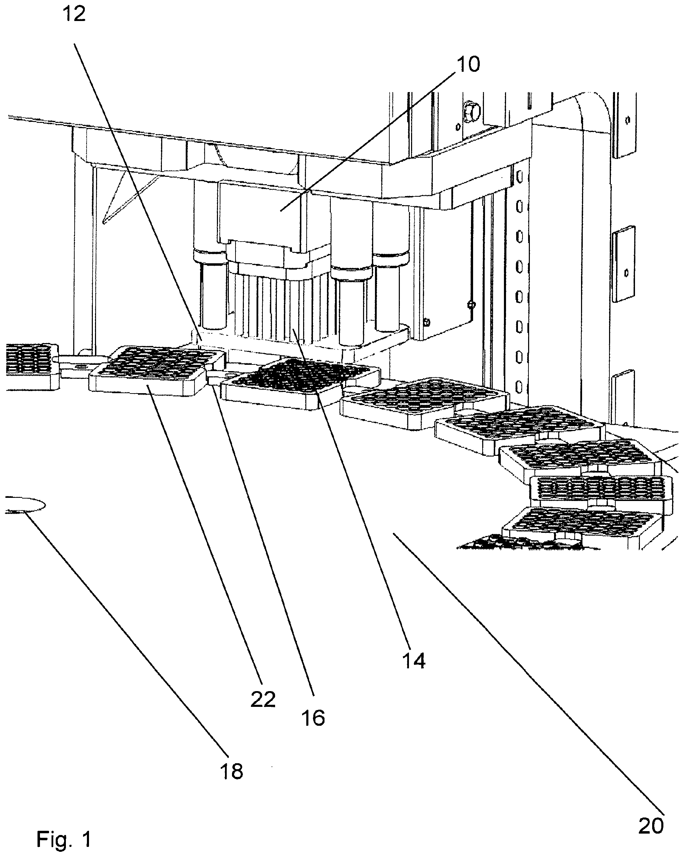

In Fig. 1 ist eine beispielhaft ausgebildete erfindungsgemäße Bearbeitungsvorrichtung angegeben, welche mehrere Halteeinrichtungen 22 sowie eine Ausstoßeinrichtung 10 zum Ausstoßen der Energiespeicherkerne mit 48 Ausstoßern 14 und einem Niederhalter 12 umfasst. Zur Beaufschlagung der Ausstoßeinrichtung 10 mit einer Kraft ist dabei beispielhaft eine 50 Tonnen Exzenterpresse vorgesehen. Weiterhin ist ein beispielsweise elektromotorisch um eine Achse 16 drehbarer Rundtakttisch 20 vorgesehen auf welchem 24 Halteeinrichtungen 22 radial umlaufen mit einem Winkelabstand von 15° angeordnet und/oder eingelassen sind. Jede Halteeinrichtung 22 weist dabei 48 Aufnahmen für Alkali Mangan Rundzellen eines vorbestimmbaren Typs vorgesehen. Jeweils zwei Halteeinrichtungen sind mittels einer Halteklammer 16 am Rundtakttisch befestigt beziehungsweise festgelegt.

Grundsätzlich können dabei als Eingangsmaterial beziehungsweise Energiespeicher sortenreine Alkali Mangan Rundzellen der Typen C, D sowie AA und AAA bearbeitet werden.

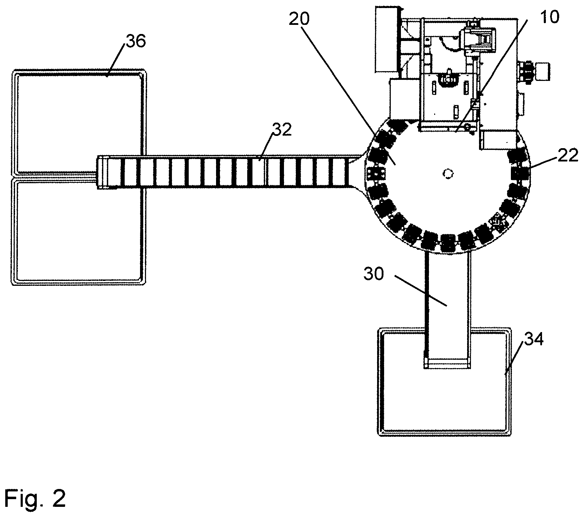

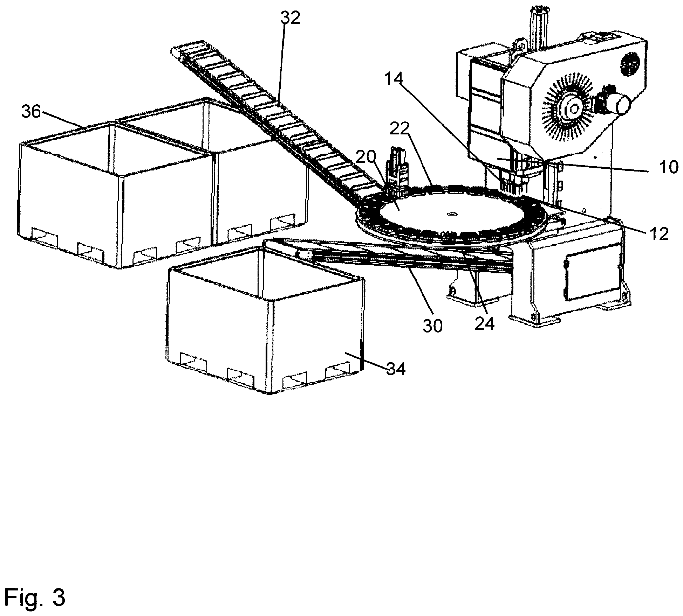

Neben den vorgenannten Einrichtungen sind, wie in Figur 2 und Figur 3 angegeben, noch Fördereinrichtungen 30,32 zum Auffangen und Abtransport der ausgestoßenen Energiespeichermaterialien und Lagerbehälter 34,36 zu deren Sammlung vorgesehen. Die beiden Fördereinrichtungen schließen im hier gezeigten Beispiel einen Winkel von ca. 90° ein, Sind jedoch grundsätzlich beliebig anordenbar.

Deutlich ist der vorgesehene Rundtakttisch mit den radial umlaufend angeordneten 24 Halteeinrichtungen zu erkennen. Weiterhin weist der Rundtakttisch eine obere drehbare Montageplatte 20 auf, in welche die 24 Halteeinrichtungen 22 eingelegt beziehungsweise eingelassen sind, sowie eine unterhalb der Montageplatte 20 starr angeordnete Lagerplatte 24 auf.

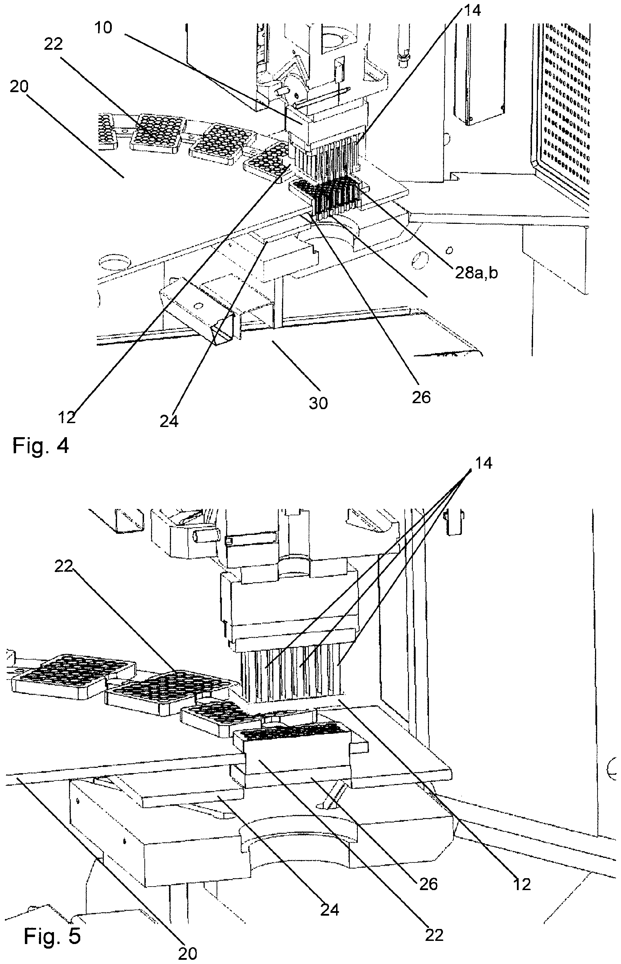

In Fig. 4 ist eine 3dim-Schnittansicht durch den Rundtakttisch und die Ausstoßeinrichtung 10 und eine mit Alkali Mangan Rundzellen 28a,b gefüllte Halteeinrichtung 22 gezeigt, wobei auch hier die Montageplatte 20 sowie die Lagerplatte 24 des Rundtakttisches, sowie die in die Montageplatte 20 eingelassenen Halteeinrichtungen 22 und eine in die Lagerplatte 24 eingelassene Matritze 26 angegeben ist.

Dabei ist in der Montageplatte für jede anzuordnende Halteeinrichtung 22 eine Ausnehmung vorgesehen in welche die jeweilige Halteeinrichtung 22 eingesetzt ist. Die jeweilige Halteeinrichtung 22 weist dabei, wie in Figur 5 angegeben eine umlaufende Kante auf, mit welcher sich die Halteeinrichtung 22 an der Montageplatte 20 abstützt und auf dieser Montageplatte aufliegt.

Die eingesetzten Energiespeicher 28a,b stützten sich dabei an der Lagerplatte 24 ab, wobei im Bereich der jeweiligen Ausstoßeinrichtung 10, deren Ausstoßern 14 und dem Niederhalter 12 gegenüberliegend in der Lagerplatte 24 eine Matritze 26 mit Durchgangsöffnungen für den Durchgang oder Durchtritt der Energiespeicherkerne 28d beim Ausstoßen derselben vorgesehen ist.

Im hier gezeigten Beispiel ist die Lagerplatte 24 starr und die Montageplatte 20 drehbewegbar angeordnet.

Weiterbildend ist zur Erleichterung des Ausstoßens der Energiespeicherkerne 28d optional noch eine Schwächungseinrichtung (in den Figuren nicht explizit gezeigt) mit einer Press- oder Stanzeinrichtung mit einer der Anzahl der in der Halteeinrichtung vorgesehenen Energiespeicher-Aufnahmen entsprechenden Anzahl an Schwächungsstempeln, insbesondere mit radial umlaufender und/oder stern- oder strahlenförmiger Schneidkante und/oder konisch zulaufendem Dorn, vorsehbar, wobei die Stempel mit einer voreinstellbaren Kraft beaufschlagt werden beziehungsweise beaufschlagbar sind, und von unten in die Aufnahmen der jeweiligen Halteeinrichtung 22 einfahrbar sind, so dass von unten in die dem Niederhalter abgewandte und/oder unten liegende Stirnfläche oder Kontaktfläche des jeweiligen Energiespeichers 28a,b 28a,b und insbesondere der jeweiligen Rundzelle eine Schwächungsöffnung oder eine oder mehrere Schwächungslinien beziehungsweise Sollbruchlinien eingeformbar und/oder einstanzbar ist oder nach Einfahren der Stempel eingeformt oder eingestanzt sind. Der Niederhalter 12 dient dabei als Gegenlager um ein nach oben gerichtetes Herausgleiten der Energiespeicher 28a,b aus der Halteeinrichtung 22 zu vermeiden beziehungsweise zu verhindern. Vorteilhaft sind dabei alle in einer Halteeinrichtung 22 eingesetzten Energiespeicher 28a,b und/oder Rundzellen gleichzeitig beabeitbar.

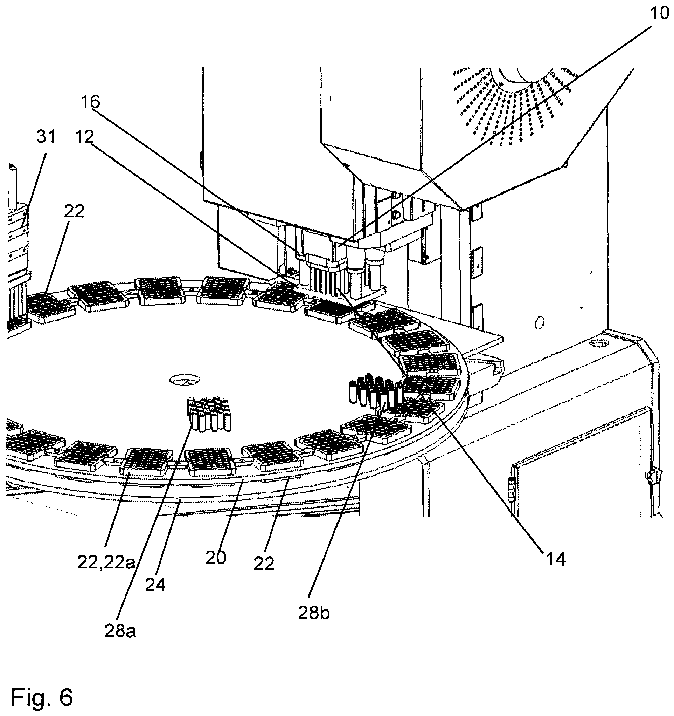

Nach Einformen oder Ein- beziehungsweise Ausstanzen der Schwächungsöffnung können bereits flüssige Bestandteile der jeweiligen Energiespeicher, insbesondere der Rundzellen, nach unten, beispielsweise in eine entsprechende Auffangrinne oder Wanne und/oder Sammelbehälter, austreten oder ausfließen.
Wie in Figur 6 angegeben ist eine zweite Ausstoßeinrichtung 31 vorsehbar, wobei im Bereich der zweiten Ausstoßeinrichtung 31 für den jeweiligen Außenmantel 28c in der Lagerplatte 24 wenigstens eine Ausnehmung vorgesehen ist, derart, daß die in der Halteeinrichtung 22 angeordneten kernlosen Energiespeicher durch die Montageplatte 20 und Lagerplatte 24 und damit den Rundtakttisch hindurchbewegbar sind und/oder unterhalb der Lagerplatte 24, insbesondere mittels einer Fördereinrichtung 32, auffangbar sind.

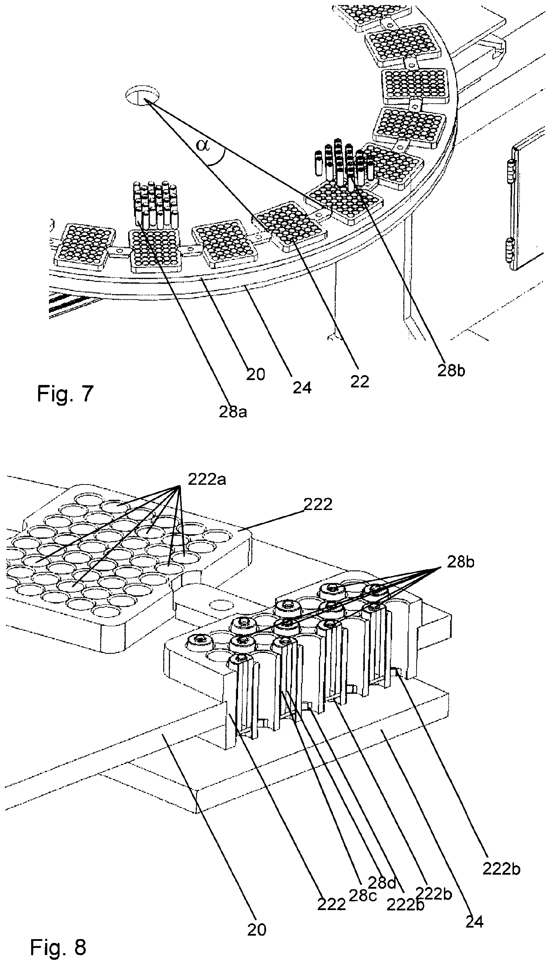

Auch der Figur 6 ist entnehmbar, dass auf dem Rundtakttisch und insbesondere der Montageplatte 20 magazinartige Halteeinrichtungen 22, 24 in der Anzahl, vorgesehen sind, welche nahezu radial umlaufend, insbesondere mit einem Winkelabstand α von 15° (siehe auch Fig. 7), angeordnet sind.

Demnach sind in der Lagerplatte 24 wenigstens zwei Bereiche mit Ausnehmungen vorgesehen, wobei in wenigstens einem ersten Bereich eine erste Ausnehmung vorgesehen ist, in welche eine Matritze 26 einsetzbar ist, welche Durchgangsöffnungen aufweist, die in Anzahl und Anordnung den Aufnahmen der wenigstens einen Halteeinrichtung 22 entsprechen und einen Querschnitt und/oder lichte Weite aufweisen, welche auf die Abmessungen des Kerns 28d der jeweilig zu bearbeitenden Energiespeicherart angepasst ist.

Montageplatte 20 und Lagerplatte 24 wirken dabei derart zusammen, dass die Montageplatte jeweils in 15° Schritten gegen die jeweilige Ausstoßeinrichtung 10,31 und die Lageplatte 24 rotatorisch im Gegenuhrzeigersinn bewegbar ist und dass die Energiespeicherkerne 28d der jeweiligen Halteeinrichtung 22 nach unten durch den Rundtakttisch und insbesondere die Montageplatte 20 und die Lagerplatte 24 hindurch in eine Förder-/Sammeleinrichtung 30,32,34,36 ausdrückbar und/oder ausstoßbar sind, wobei sich die zu bearbeitenden Energiespeicher 28a,b , und insbesondere ihre Außenmäntel 28c, während des Ausdrückens oder Ausstoßens gegen die eingesetzte Matritze 26 abstützen, und das ausgedrückte Energiespeichermaterial unterhalb des Tisches 20,24 aufgefangen und mittels entsprechender Fördereinrichtungen 30,32 gesammelt wird.

Demnach werden verfahrensgemäß vorsortierte Energiespeicher eines Typs selektiert und gerichtet einer magazinartigen Halteeinrichtung 22 zugeführt, wobei mehrere Energiespeicher 28a,b in einem Raster nebeneinander ausgerichtet und angeordnet werden und mittels wenigstens einer Ausstoßeinrichtung 10,31 schrittweise zunächst das Anodenmaterial der rasterartig angeordneten Energiespeicher aus den Energiespeichern 28a,b und dann das Kathodenmaterial sowie die Energiespeicherhülle aus der Halteeinrichtung 22 ausgestoßen beziehungsweise ausgedrückt und getrennt voneinander gesammelt und einer weiteren Verarbeitung bereitgestellt wird.

Dabei sind 48 Energiespeicher in die Halteeinrichtung einsetzbar und gleichzeitig bearbeitbar, so dass in lediglich einem Bearbeitungsschritt jeweils gleichzeitig 48 Energiespeicherkerne 28d und lediglich einem weiteren Bearbeitungsschritt 48 Außenmäntel 8c und Hüllen der zu bearbeitenden Energiespeicher 28a,b ausgedrückt und/oder ausgestoßen werden.

Die Befüllung einer Halteeinrichtung 22 erfolgt dabei in zwei Schritten, wobei eine 48 Energiespeicher aufnehmende Halteeinrichtung 22, wie in Fig. 6 gezeigt, in zwei Chargen 28a und 28b oder Durchgängen mit jeweils 24 Energiespeichen in versetzter Anordnung befüllt oder bestückt wird.

Nicht explizit in den Figuren angegeben, umfasst die Bearbeitungsvorrichtung wenigstens einen Vorratsbunker in welchem die vorselektierten sortenreinen Energiespeicher 28a,b zur mechanischen Bearbeitung vorgehalten und gelagert sind und über beispielsweise eine Vibra Abzugsrinne aus dem Vorratsbunker batch- beziehungsweise stapelweise oder paketweise an eine Vereinzelungsanlage übergeben werden.

Vorteilhaft sind mehrere Rundbürsten vorsehbar, mittels derer die linear durch Vibration angetriebenen Energiespeicher, insbesondere Rundzellen, an zwei zuführstränge übergeben werden, wobei die jeweilige Halteeinrichtung 22 taktweise parallel an zwei versetzten Stellen mittels der beiden Zuführstränge mit jeweils 24 Schlauchleitungen mit jeweils 24 Rundzellen befüllt werden und/oder eine Zuführredundanz gebildet ist, wobei letztlich jede Halteeinrichtung mit 48 Zellen gefüllt wird.

Die mit Energiespeichern 28a,b gefüllten Halteeinrichtungen 22 werden nach dem Befüllen weitergetaktet, das heißt die Montageplatte jeweils um 15° weitebewegt, und die eingefüllten Energiespeicher 28a,b bei dem Auspressvorgang vom Energiespeicherkern, das heißt vom Zinkoxid, Papier, Messingstift getrennt, wobei die Kerne 28d nach dem Ausstoßen auf eine Fördereinrichtung 30, insbesondere ein Abförderband fallen.

Auf diese Weise werden nacheinander die einzelnen Halteeinrichtungen 22 bestückt, die Energiespeicherkerne ausgestoßen und anschließend die verbliebenen Energiespeicherreste ausgestoßen. Demgemäß können ca. alle 4 bis 10 Sekunden jeweils 48 Rundzellen bearbeitet werden

Nach der mechanischen Separation kann der ausgepresste jeweilige Materialmix gesammelt und /oder einer Aufbereitungsanlage zur weiteren Verarbeitung und/oder Rohstoffrückgewinnung zugeführt werden

Beim eigentlichen Ausstoßvorgang der Energiespeicherkerne 28d senkt sich verfahrensgemäß in einem ersten Schritt der Niederhalter 12 zunächst bis auf die Halteeinrichtung 22 ab und drückt dabei nach dem Einsetzen noch überstehende Energiespeicher in die Aufnahmen 22a der jeweiligen Halteeinrichtung 22 bis die Energiespeicher mit deren Oberkante bündig abschließen. Um die dazu erforderliche Kraft aufzubringen wird eine Exzenterpresse mit insbesondere vier Gasdruckkolben 16 eingesetzt. Derartig überstehende Energiespeicher sind beispielhaft in Fig. 8 gezeigt.

In einem optionalen Zwischenschritt (welcher in den Figuren nicht explizit dargestellt ist) ist zur Erleichterung beziehungsweise Vereinfachung des Ausstoßvorgangs der Energiespeicherkerne 28d eine Schwächung, insbesondere Materialschwächung, der nach unten gerichteten Stirnseite, das heißt der dem Niederhalter 12 abgewandten Seite der in der Halteeinrichtung 22 eingesetzten Energiespeicher 28a,b, insbesondere Rundzellen, bewirkbar.

Vorteilhaft werden bei diesem Schwächungsprozess oder -vorgang die Energiespeicher 28a,b, insbesondere Rundzellen, in der jeweiligen Halteeinrichtung 22 von unten derart bearbeitet, dass in die dem Niederhalter 12 abgewandte und/oder unten liegende Stirnfläche oder Kontaktfläche jedes Energiespeichers 28a,b und/oder jeder Rundzelle eine Schwächungsöffnung beziehungsweise -ausnehmung oder eine oder mehrere Schwächungslinien beziehungsweise Sollbruchlinien eingeformt und/oder eingestanzt wird. Der Niederhalter 12 dient dabei als Gegenlager um ein nach oben gerichtetes Herausgleiten der Energiespeicher 28a,b aus der Halteeinrichtung 22 zu vermeiden beziehungsweise zu verhindern.
Vorteilhaft sind dabei alle in einer Halteeinrichtung 22 eingesetzten Energiespeicher 28a,b und/oder Rundzellen gleichzeitig beabeitbar.

Für diese Bearbeitung wird dabei beispielhaft eine Schwächungseinrichtung (in den Figuren nicht explizit gezeigt) mit einer Press- oder Stanzeinrichtung mit einer der Anzahl der in der Halteeinrichtung vorgesehenen Energiespeicher-Aufnahmen entsprechenden Anzahl an Schwächungsstempeln, insbesondere mit radial umlaufender und/oder stern- oder strahlenförmiger Schneidkante und/oder konisch zulaufendem Dorn, eingesetzt beziehungsweise verwendet, wobei die Stempel mit einer voreinstellbaren Kraft beaufschlagt werden beziehungsweise beaufschlagbar sind, und wobei diese Stempel beim Schwächungsvorgang von unten in die Aufnahmen der jeweiligen Halteeinrichtung 22 eingreifen, wobei die Energiespeicher 28a,b, insbesondere Rundzellen, von unten derart bearbeiten werden, dass in die dem Niederhalter abgewandte und/oder unten liegende Stirnfläche oder Kontaktfläche des jeweiligen Energiespeichers 287a,b und insbesondere der jeweiligen Rundzelle eine Schwächungsöffnung oder eine oder mehrere Schwächungslinien beziehungsweise Sollbruchlinien eingeformt und/oder eingestanzt werden beziehungsweise sind. Nach Einformen oder Ein- beziehungsweise Ausstanzen der Schwächungsöffnung können bereits flüssige Bestandteile der jeweiligen Energiespeicher, insbesondere der Rundzellen, nach unten, beispielsweise in eine entsprechende Auffangrinne oder Wanne und/oder Sammelbehälter, ausfließen.

In einem zweiten Schritt werden dann die Ausstoßer 14 durch die Durchgangsöffnungen des Niederhalters 12 in die Energiespeicher 28a,b und die Aufnahmen 22a der jeweiligen Halteeinrichtung 22 abgesenkt und drücken somit die Energiespeicherkerne aus den Energiespeichern nach unten aus.

Dabei werden insbesondere alle Energiespeicherkerne der in der Halteeinrichtung befindlichen Energiespeicher gleichzeitig ausgedrückt.

Danach werden die Ausstoßer 14 wieder aus den Energiespeichern zurückgezogen, wobei der Niederhalter 12 während des Zurückziehens zunächst auf der jeweiligen Halteeinrichtung 22 verbleibt, bis sich die Ausstoßer 14 wieder außerhalb der Energiespeicher befinden. Dann wird auch der Niederhalter 12 wieder angehoben beziehungsweise zurückgezogen.

Mittels des Niederhalters 12 wird vermieden, dass die Energiespeicherreste an den Ausstoßern 14 hängen bleiben und mit diesen aus der Halteeinrichtung 22 entfernt werden. Demnach hält der Niederhalter die Energiespeicher während des gesamten Ausstoßvorgangs der Kerne in Position und fixiert diese in der Halteeinrichtung.

Der hier beispielhafte gezeigte Niederhalter 12 ist dabei als Platte mit rasterartig angeordneten Ausnehmungen oder Durchgängen, insbesondere in der Art von Durchgangsbohrungen, ausgebildet, wobei das Raster dem Raster der Ausstoßeinrichtung 10 sowie der Halteeinrichtung 22 entspricht und der Querschnitt der Ausnehmungen auf den Querschnitt der einzelnen Ausstoßer 14 angepasst ist.

Die Kontaktfläche des jeweiligen Ausstoßers 14 ist zur Erleichterung des Ausstoßbeziehungsweise Auspressvorgangs dabei als plane Fläche mit einer radial umlaufenden Schneidkante ausgebildet.

Die in der Halteeinrichtung verbliebenen Energiespeicherreste werden nach Weiterbewegung beziehungsweise Drehung der Lagerplatte mittels einer zweiten Ausstoßeinrichtung 31 durch wenigstens eine weitere Ausnehmung in der Lagerplatte 24 hindurchgedrückt und unterhalb der Lagerplatte aufgefangen und gesammelt. Vorteilhaft ist hierzu nur ein deutlich geringerer Kraftaufwand erforderlich als beim Ausstoßen der Energiespeicherkerne.

Wie insbesondere den Figuren 4 bis 7 entnehmbar, umfasst die beispielhaft erfindungsgemäß ausgebildete Bearbeitungsvorrichtung für die Verwertung elektrochemischer Energiespeicher und insbesondere für Alkali-Mangan-Rundzellen gelöst, 24 magazinartige Halteeinrichtungen 22 sowie zwei dazu komplementär ausgebildete Ausstoßeinrichtungen, wobei die jeweilige Halteeinrichtung 22 mehrere, insbesondere 48 in einem Raster angeordnete Energiespeicheraufnahmen 22a aufweist und jede dieser Aufnahmen 22a als zylinderartige Ausnehmung ausgebildet ist und in Querschnitt und/oder lichte Weite und/oder Abmessung auf die Abmessungen der jeweilig zu bearbeitenden Energiespeicherart 28a,b angepasst sind, und die Ausstoßeinrichtung 10,31 mehrere im Raster der Halteeinrichtung angeordnete Ausstoßer 14 aufweist und jeder Ausstoßer 14 als zylinderartiger Stift oder Zapfen ausgebildet ist, der in Querschnitt und/oder Abmessung auf die Abmessungen des jeweiligen Energiespeicherkerns 28d oder des jeweilig zu bearbeitenden Energiespeichers 28a,b selbst angepasst ist.

Wie in Fig. 8 angegeben ist im hier gezeigten Beispiel die Lagerplatte 224 dabei unterhalb der jeweiligen Halteeinrichtungen 222 angeordnet, so dass die Halteeinrichtungen 222 zwischen Lagerplatte 224 und Ausstoßeinrichtung positionierbar und/oder anordenbar sind.

Gemäß der Ausführung nach Fig. 8 weist die jeweilige Energiespeicheraufnahme 222a der Halteeinrichtung 222 an ihrem der Ausstoßeinrichtung abgewandtem Ende eine Querschnittsverengung 222b, insbesondere in Form von drei nach Innen gerichteten Anformungen auf, auf welchen sich die Energiespeicher 28a,b nach Einfüllen beziehungsweise Einsetzen in die Halteeinrichtung 222 abstützen und/oder aufliegen.

Dabei ist vorsehbar, dass die drei Anformungen gleichverteilt über den Innenumfang der Aufnahme 222a angeordnet sind. Um eine Beschädigung des jeweiligen Ausstoßers zu vermeiden ist dieser vorteilhaft an die Geometrie und Abmessung, insbesondere betreffend Länge, Höhe Breite, der Querschnittsverengung 222b und insbesondere der drei Anformungen angepasst.

## Patentansprüche

1. Bearbeitungsverfahren für die Verwertung elektrochemischer Energiespeicher, und insbesondere für Alkali-Mangan-Rundzellen, wobei vorsortierte Energiespeicher eines Typs selektiert und gerichtet einer magazinartigen Halteeinrichtung (22,222) zugeführt werden, wobei mehrere Energiespeicher in einem Raster nebeneinander ausgerichtet und angeordnet werden und mittels wenigstens einer Ausstoßeinrichtung (10,31) schrittweise zunächst das Anodenmaterial der rasterartig angeordneten Energiespeicher aus den Energiespeichern und dann das Kathodenmaterial sowie die Energiespeicherhülle aus der Halteeinrichtung (22,222) ausgestoßen oder ausgedrückt und getrennt voneinander gesammelt und für eine weitere Verarbeitung bereitgestellt werden.

2. Verfahren nach Anspruch 1, **dadurch gekennzeichnet, dass** gleichzeitig 48 Energiespeicher in die Halteeinrichtung (22,222) einsetzbar und bearbeitbar sind, so dass in lediglich einem Bearbeitungsschritt jeweils gleichzeitig 48 Energiespeicherkerne und lediglich einem weiteren Bearbeitungsschritt 48 Außenmäntel und Hüllen der zu bearbeitenden Energiespeicher (28a,28b) ausgedrückt und/oder ausgestoßen werden.

3. Verfahren nach einem der Ansprüche 1 oder 2, **dadurch gekennzeichnet, dass** mehrere magazinartige Halteeinrichtungen (22,222) vorgesehen sind, welche jeweils nacheinander mit Energiespeichern (28a,28b) gefüllt und schrittweise zunächst die Energiespeicherkerne (28d) ausgestoßen oder ausgedrückt und gesammelt, und dann die in der jeweiligen Halteeinrichtung (22,222) verbliebenen Außenmäntel (28c) aus der Halteeinrichtung ausgestoßen und getrennt von den Kernen gesammelt werden.

4. Verfahren nach einem der vorherigen Ansprüche, **dadurch gekennzeichnet, dass** die Befüllung einer Halteeinrichtung in zwei Schritten durchgeführt wird, wobei eine 48 Energiespeicher aufnehmende Halteeinrichtung (22,222) in zwei Chargen oder Durchgängen mit jeweils 24 Energiespeichen (28a,28b) in versetzter Anordnung befüllt oder bestückt wird.

5. Bearbeitungsvorrichtung für die Verwertung elektrochemischer Energiespeicher und insbesondere für Alkali-Mangan-Rundzellen, welche wenigstens eine magazinartige Halteeinrichtung (22,222) sowie wenigstens eine dazu komplementär ausgebildete Ausstoßeinrichtung (10,31) umfasst, und wobei die Halteeinrichtung (22,222) mehrere in einem Raster angeordnete Energiespeicheraufnahmen (22a,222a) aufweist und jede dieser Aufnahmen als zylinderartige Ausnehmung und/oder hohlzylinderartig ausgebildet ist und in Querschnitt und/oder lichte Weite und/oder Abmessung auf die Abmessungen der jeweilig zu bearbeitenden Energiespeicherart angepasst sind, und die Ausstoßeinrichtung mehrere im Raster der Halteeinrichtung (22,222) angeordnete Ausstoßer (14) aufweist und jeder Ausstoßer als zylinderartiger Stift oder Zapfen ausgebildet ist, der in Querschnitt und/oder Abmessung auf die Abmessungen des jeweiligen Energiespeicherkerns (28d) oder des jeweilig zu bearbeitenden Energiespeichers (28a,28b) selbst angepasst ist.

6. Vorrichtung nach Anspruch 5, **dadurch gekennzeichnet, dass** eine Lagerplatte (24) mit, der jeweiligen Ausstoßeinrichtung gegenüberliegend angeordneten Durchgangsöffnungen vorgesehen ist, gegen welche sich im Bereich der Halteeinrichtung die jeweilig zu bearbeitenden Energiespeicher (28a,28b) abstützen, wobei die Öffnungen in Durchmesser und/oder Querschnitt auf den während des Ausstoßens jeweilig in sie eingreifenden oder durchgreifenden Ausstoßer (14) angepasst sind.

7. Vorrichtung nach Anspruch 5 oder Anspruch 6, **dadurch gekennzeichnet, dass** die jeweilige Energiespeicheraufnahme (22a,222a) der Halteeinrichtung (22,222) an ihrem der Ausstoßeinrichtung abgewandtem Ende eine Querschnittsverengung, insbesondere in Form von drei nach innen gerichteten Anformungen (222b) aufweist, auf welchen sich die Energiespeicher nach Einfüllen beziehungsweise Einsetzen in die Halteeinrichtung abstützen und/oder aufliegen.

8. Vorrichtung nach einem der Ansprüche 5 bis 7, die einen Rundtakttisch umfasst, **dadurch gekennzeichnet, dass** wenigstens eine magazinartige Halteeinrichtung (22,222) an dem Rundtakttisch, insbesondere kraftschlüssig mittels Verschraubung oder Klemmung, angeordnet ist.

9. Vorrichtung nach Anspruch 8, **dadurch gekennzeichnet, dass** die wenigstens eine Halteeinrichtung (22,222) in den Rundtakttisch eingelassen ist, wobei der Rundtakttisch eine Montageplatte (20) mit wenigstens einer Ausnehmung aufweist in welche die jeweilige Halteeinrichtung (22,222) eingesetzt ist und die jeweilige Halteeinrichtung eine umlaufende Kante aufweist, mit welcher sie sich an der Montageplatte (20) abstützt und auf dieser Montageplatte aufliegt.

10. Vorrichtung nach einem der Ansprüche 8 oder 9, **dadurch gekennzeichnet, dass** der Rundtakttisch neben der Montageplatte (20) eine unterhalb der Montageplatte angeordnete Lagerplatte (24) aufweist, gegen welche sich die eingesetzten Energiespeicher (28a,28b) abstützten und welche im Bereich der jeweiligen Ausstoßeinrichtung (10,31), deren Ausstoßern (14) gegenüberliegend wenigstens eine angeordnete Durchgangsöffnung für den Durchgang oder Durchtritt der Energiespeicherkerne (28d) oder Energiespeicher (28a,28b) beim Ausstoßen derselben aufweist.

## Claims

1. Processing method for the reclamation of electrochemical energy stores, and in particular for alkaline-manganese round cells, wherein pre-sorted energy stores of one type are selected and fed in directed fashion to a magazine-like holding device (22, 222), wherein multiple energy stores are oriented and arranged mutually adjacently in a grid, and, by means of at least one ejection device (10, 31), in stepped fashion, firstly the anode material of the energy stores arranged in the manner of a grid is ejected from or pushed out of the energy stores, and then the cathode material and the energy store casing are ejected from or pushed out of the holding device (22, 222), and these are mutually separately collected and made available for further processing.

2. Method according to Claim 1, **characterized in that** 48 energy stores can be inserted into and processed in the holding device (22, 222) simultaneously, such that, in only one processing step, in each case simultaneously 48 energy store cores, and in only one further processing step, 48 outer jackets and casings, of the energy stores (28a, 28b) for processing are pushed out and/or ejected.

3. Method according to either of Claims 1 and 2, **characterized in that** multiple magazine-like holding devices (22, 222) are provided, which are in each case successively filled with energy stores (28a, 28b), and, in stepped fashion, firstly the energy store cores (28d) are ejected or pushed out and collected, and then the outer jackets (28c) which remain in the respective holding device (22, 222) are ejected from the holding device and collected separately from the cores.

4. Method according to one of the preceding claims, **characterized in that** the filling of a holding device is performed in two steps, wherein a holding device (22, 222) which accommodates 48 energy stores is filled or populated in two batches or passes with in each case 24 energy stores (28a, 28b) in an offset arrangement.

5. Processing device for the reclamation of electrochemical energy stores, and in particular for alkaline-manganese round cells, which processing device has at least one magazine-like holding device (22, 222) and at least one ejection device (10, 31) of complementary form with respect to said holding device, and wherein the holding device (22, 222) has multiple energy store receptacles (22a, 222a) arranged in a grid, and each of said receptacles is in the form of a cylindrical recess and/or is of hollow cylindrical form and are adapted in terms of cross section and/or clear width and/or dimensions to the dimensions of the energy store type respectively to be processed, and the ejection device has multiple ejectors (14) arranged in the grid of the holding device (22, 222), and each ejector is formed as a cylindrical pin or peg which is adapted in terms of cross section and/or dimensions to the dimensions of the respective energy store core (28d) or of the energy store (28a, 28b) itself which is respectively to be processed.

6. Device according to Claim 5, **characterized in that** a bearing plate (24) with passage openings arranged opposite the respective ejection device is provided, against which bearing plate the energy stores (28a, 28b) respectively to be processed are supported in the region of the holding device, wherein the openings are adapted in terms of diameter and/or cross section to the ejectors (14) which respectively engage into or through said openings during the ejection.

7. Device according to Claim 5 or Claim 6, **characterized in that** the respective energy store receptacle (22a, 222a) of the holding device (22, 222) has, at its end averted from the ejection device, a cross-sectional narrowing, in particular in the form of three inwardly directed integrally moulded portions (222b), on which the energy stores are supported and/or lie after being filled or inserted into the holding device.

8. Device according to one of Claims 5 to 7, which comprises a rotary indexing table, **characterized in that** at least one magazine-like holding device (22, 222) is arranged on the rotary indexing table, in particular in non-positively locking fashion by means of screw connection or clamping.

9. Device according to Claim 8, **characterized in that** the at least one holding device (22, 222) is recessed into the rotary indexing table, wherein the rotary indexing table has a mounting plate (20) with at least one recess into which the respective holding device (22, 222) is inserted, and the respective holding device has an encircling edge by means of which it is supported on the mounting plate (20) and lies on said mounting plate.

10. Device according to either of Claims 8 and 9, **characterized in that** the rotary indexing table has, adjacent to the mounting plate (20), a bearing plate (24) which is arranged underneath the mounting plate and against which the inserted energy stores (28a, 28b) are supported and which, in the region of the respective ejection device (10, 31), opposite the ejectors (14) thereof, has at least one arranged passage opening for the passage of the energy store cores (28d) or energy stores (28a, 28b) during the ejection thereof.

## Revendications

1. Procédé d'usinage destiné à recycler des accumulateurs d'énergie électrochimiques et notamment des piles alcalines rondes au manganèse, lors duquel on amène des accumulateurs d'énergie sélectionnés et dirigés vers un système de maintien (22, 222) sous forme de magasin, lors duquel on place plusieurs accumulateurs d'énergie orientés et placés côte à côte en une trame et au moyen d'au moins un dispositif d'éjection (10, 31) on expulse ou on exprime par étapes, d'abord la matière anodique des accumulateurs d'énergie placés en trame hors des accumulateurs d'énergie et ensuite la matière cathodique, ainsi que la gaine des accumulateurs d'énergie hors du système de maintien (22, 222) et on les collecte, séparément les unes des autres et on les met à disposition pour un usinage.

2. Procédé selon la revendication 1, **caractérisé en ce que** 48 accumulateurs d'énergie sont insérables simultanément dans le système de maintien (22, 222) et usinables, de sorte qu'en une seule étape d'usinage, chaque fois simultanément 48 coeurs d'accumulateur d'énergie et en une seule étape d'usinage supplémentaire, 48 enveloppes extérieures et gaines des accumulateurs d'énergie (28a, 28b) sont exprimés et/ou expulsés.

3. Procédé selon l'une quelconque des revendications 1 ou 2, **caractérisé en ce que** plusieurs systèmes de maintien (22, 222) en forme de magasins sont prévus, que l'on remplit successivement d'accumulateurs d'énergie (28a, 28b) et par étapes, on expulse ou on exprime d'abord les coeurs des accumulateurs d'énergie (28d) et on les collecte et ensuite, on expulse du système de maintien les enveloppes extérieures (28c) restées dans le système de maintien (22, 222) respectif et on les collecte séparément des coeurs.

4. Procédé selon l'une quelconque des revendications précédentes, **caractérisé en ce qu'**on procède au remplissage d'un système de maintien en deux étapes, un système de maintien (22, 222) qui réceptionne 48 accumulateurs d'énergie étant rempli ou équipé en deux charges ou passages avec chaque fois 24 accumulateurs d'énergie (28a,28b) en placement décalé.

5. Dispositif d'usinage destiné à recycler des accumulateurs d'énergie électrochimiques et notamment des piles alcalines rondes au manganèse, lequel comprend au moins un système de maintien (22, 222) en forme de magasin, ainsi qu'un dispositif d'expulsion (10, 31) conçu de manière complémentaire à ce dernier et le système de maintien (22, 222) comportant plusieurs réceptacles (22a, 222a) d'accumulateurs d'énergie placés en une trame et chacun de ces réceptacles étant conçu en tant qu'évidement de type cylindrique et/ou de forme cylindrique creuse et leurs sections transversales et/ou leurs diamètres intérieurs et/ou leurs dimensions étant adaptés aux dimensions du type d'accumulateur d'énergie qui doit être respectivement usiné et le système d'expulsion comportant plusieurs expulseurs (14) placés selon la trame du système de maintien (22, 222) et chaque expulseur étant conçu en tant que tige ou tenon en forme de cylindre dont la section transversale et/ou les dimensions sont adaptées aux dimensions du coeur d'accumulateur d'énergie (28d) concerné ou de l'accumulateur d'énergie (28a, 28b) proprement dit qui doit respectivement être usiné.

6. Dispositif selon la revendication 5, **caractérisé en ce qu'**il est prévu une plaque d'appui (24) avec des orifices de passage en vis-à-vis du système d'expulsion concerné, sur laquelle les accumulateurs d'énergie (28a, 28b) qui doivent être respectivement usinés s'appuient dans la région du système de maintien, le diamètre et/ou la section transversale des orifices étant adaptés à l'expulseur (14) qui pendant l'expulsion s'engage respectivement en eux ou les traverse.

7. Dispositif selon la revendication 5 ou la revendication 6, **caractérisé en ce que** sur son extrémité opposée au système d'expulsion, le réceptacle (22a, 222a) d'accumulateurs d'énergie respectif du système de maintien (22, 222) présente un rétrécissement de section transversale, notamment sous la forme de trois surmoulages (222b) dirigés vers l'intérieur sur lesquels les accumulateurs d'énergie s'appuient et/ou reposent après le remplissage, respectivement l'insertion dans le système de maintien.

8. Dispositif selon l'une quelconque des revendications 5 à 7, qui comprend un plateau rotatif indexant, **caractérisé en ce qu'**au moins un système de maintien (22, 222) sous forme de magasin est placé sur le plateau rotatif indexant, notamment par complémentarité de force, au moyen de boulonnage ou serrage.

9. Dispositif selon la revendication 8, **caractérisé en ce que** l'au moins un système de maintien (22, 222) sous forme de magasin est encastré dans le plateau rotatif indexant, le plateau rotatif indexant comportant une plaque de montage (20) avec au moins un évidement dans lequel est inséré le système de maintien (22, 222) respectif et le système de maintien respectif comportant une arête périphérique, à l'aide de laquelle il s'appuie sur la plaque de montage (20) et repose sur ladite plaque de montage.

10. Dispositif selon l'une quelconque des revendications 8 ou 9, **caractérisé en ce qu'**à côté de la plaque de montage (20), le plateau rotatif indexant comporte une plaque d'appui (24) placée en-dessous de la plaque de montage contre laquelle les accumulateurs d'énergie (28a, 28b) insérés s'appuient et laquelle comporte dans la région du système d'expulsion (10, 31) respectif, au vis-à-vis des expulseurs (14) de celle-ci au moins un orifice de passage placé pour le passage ou la traversée des coeurs d'accumulateurs d'énergie (28d) ou des accumulateurs d'énergie (28a, 28b), lors de l'expulsion de ces derniers.
